# EUROPÄISCHE PATENTANMELDUNG

(11) **EP 4 491 808 A1**
(43) Veröffentlichungstag der Anmeldung: **15.01.2025**
(21) Anmeldenummer: 24187955.0
(22) Anmeldetag: 11.07.2024
(51) Int. Cl.: E02F 9/20, B60N 2/75, E02F 9/24, E02F 9/26, E02F 9/16

(54) **VERFAHREN ZUM ERMITTELN EINER POSITION EINER ARMLEHNE EINER ARBEITSMASCHINE UND ARMLEHNE**

(30) Priorität: 14.07.2023 DE 102023206695
(71) Anmelder: Robert Bosch GmbH, 70442 Stuttgart (DE)
(72) Erfinder: Mayer, Jochen, 89537 Giengen An Der Brenz (DE); Bender, Frank, 70190 Stuttgart (DE)

(57) **Zusammenfassung**

Die Erfindung betrifft ein Verfahren (300) zum Ermitteln einer Position (A, B) einer Armlehne (100, 200) eines Sitzes in einem Steuerstand einer Arbeitsmaschine, umfassend ein Ermitteln einer Beschleunigung und/oder Rotationsgeschwindigkeit (310) mittels zumindest eines Inertialsensors (110, 112), und ein Ermitteln (320) der Position (A, B) der Armlehne (100, 200) auf Basis der ermittelten Beschleunigung bzw. Rotationsgeschwindigkeit. Ferner werden eine Recheneinheit und ein Computerprogramm zur Durchführung eines solchen Verfahrens (300), sowie eine Armlehne (100, 200), ein Sitz und eine Arbeitsmaschine, die jeweils zur Durchführung eines solchen Verfahrens verwendet werden können.

## Beschreibung

Die vorliegende Erfindung betrifft ein Verfahren zum Ermitteln einer Position einer Armlehne eines Sitzes in einem Steuerstand einer Arbeitsmaschine, eine Recheneinheit und ein Computerprogramm zu dessen Durchführung, sowie eine entsprechende Armlehne, ein Sitz für eine Arbeitsmaschine und eine Arbeitsmaschine.

### Hintergrund der Erfindung

Arbeitsmaschinen, beispielsweise Bagger, besitzen häufig eine bewegliche, liftbare bzw. hochklappbare Armlehne. Diese kann zum Einsteigen nach oben geliftet werden. In diesem Zustand kann beispielsweise der Motor gestartet werden, jedoch kann aus Sicherheitsgründen die Arbeitsmaschine (der Bagger) nicht bewegt werden. Wird die Armlehne nach unten geklappt/geliftet, dann werden Maschinenfunktionen (z.B. Bewegungen der Arbeitsmaschine via Joysticks und/oder Fußpedalen etc.) freigeschaltet. Das Liften/Klappen der Armlehne kann mittels elektromechanischer Schalter sensiert. Derartige Schalter können redundant vorgesehen sein, damit entsprechende Sicherheitsregularien (Normen) erfüllt werden.

### Offenbarung der Erfindung

Erfindungsgemäß werden ein Verfahren zum Ermitteln einer Position einer Armlehne eines Sitzes in einem Steuerstand einer Arbeitsmaschine, eine Recheneinheit und ein Computerprogramm zu dessen Durchführung sowie eine entsprechende Armlehne, ein Sitz für eine Arbeitsmaschine und eine Arbeitsmaschine mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung bedient sich der Maßnahme, zur Ermittlung der Position der Armlehne (und damit letztlich für die Freigabe von Maschinenfunktionen) einen oder mehrere Inertialsensoren (Inertialmesseinheiten; engl. inertial measurement unit, IMU), insbesondere auf Basis von mikroelektromechanischen Systemen, MEMS zu verwenden, die die herkömmlichen elektromechanischen Schalter ersetzen oder ergänzen. Dadurch können Probleme, die im Zusammenhang mit elektromechanischen Schaltern (z.B. komplizierte Bereitstellung eines erforderlichen Mindeststroms, Verschleiß, undefinierte Zustände beim Schaltübergang, ...) umgangen werden.

Im Einzelnen umfasst ein erfindungsgemäßes Verfahren zum Ermitteln einer Position einer Armlehne eines Sitzes in einem Steuerstand einer Arbeitsmaschine ein Ermitteln einer Beschleunigung und/oder Rotationsgeschwindigkeit mittels zumindest eines Inertialsensors, und ein Ermitteln der Position der Armlehne auf Basis der ermittelten Beschleunigung bzw. Rotationsgeschwindigkeit. Durch die Verwendung von im Prinzip verschleißfreier und minimalstromfreier Inertialmesseinheiten und damit eindeutiger und sicherer Erkennung der Lage der Armlehne, wird die Messung der Position bzw. Lage der Armlehne einfacher und robuster. Die Einbauposition des Inertialsensors kann innerhalb der Armlehne flexibel gewählt werden.

In zumindest einer Ausgestaltung umfasst das Verfahren ferner ein Steuern einer Maschinenfunktion in Abhängigkeit von der ermittelten Position der Armlehne. Dabei kann die Maschinenfunktion insbesondere ein Freigeben eines Motorstarts und/oder ein Freigeben eines Arbeitsaggregats der Arbeitsmaschine umfassen. Damit können mittels des Verfahrens Sicherheitsvorgaben (z.B. bestimmte Normen) erfüllt werden, da zumindest einige derartige Sicherheitsvorgaben, die für Arbeitsmaschinen (z.B. Bagger) einschlägig sind, die Freigabe bzw. Sperrung von Maschinenfunktionen in Abhängigkeit von der Armlehnenposition im Steuerstand fordern.

Das Ermitteln der Beschleunigung und/oder Rotationsgeschwindigkeit kann in zumindest einer Ausgestaltung des Verfahrens mittels zumindest zweier Inertialsensoren erfolgen. Dadurch kann eine in vielen Anwendungsszenarien aus Sicherheitsgründen geforderte Redundanz der Sensorik realisiert werden.

Eine erfindungsgemäße Recheneinheit, z.B. ein Steuergerät einer Arbeitsmaschine, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Es werden ferner eine entsprechende Armlehne und ein Sitz für eine Arbeitsmaschine sowie eine Arbeitsmaschine (z.B. Bagger, Radlader, Traktor, oder eine andere, insbesondere mit hydraulisch betriebenem Arbeitsgerät ausgestattete, Arbeitsmaschine) mit einem solchen Sitz vorgeschlagen, die von den hier in Bezug auf Ausgestaltungen eines erfindungsgemäßen Verfahrens erläuterten Vorteilen sinngemäß entsprechend profitieren.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt eine erste Ausgestaltung einer erfindungsgemäßen Armlehne in schematischer Darstellung.
Figur 2 zeigt eine zweite Ausgestaltung einer erfindungsgemäßen Armlehne in schematischer Darstellung.
Figur 3zeigt eine Ausgestaltung eines erfindungsgemäßen Verfahrens in Form eines stark vereinfachten Ablaufdiagramms.

### Detaillierte Beschreibung der Zeichnung

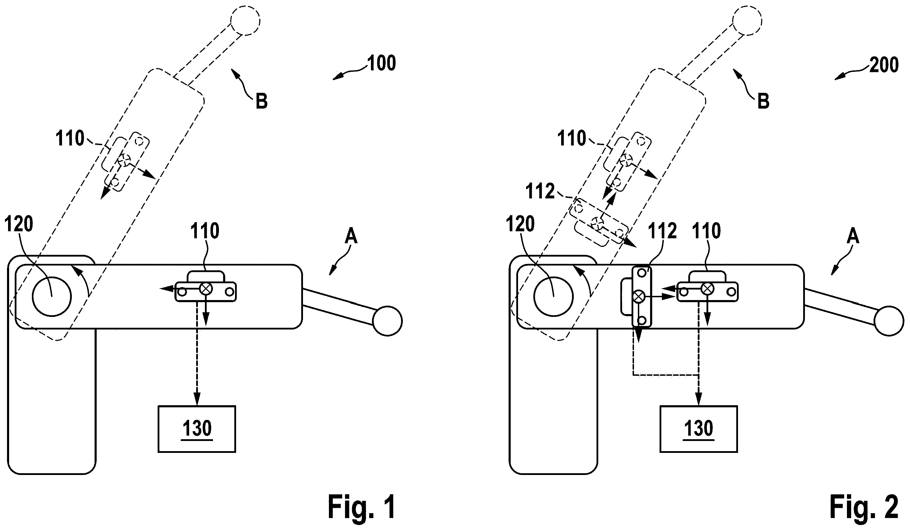

In Figur 1 ist eine erste Ausgestaltung einer erfindungsgemäßen Armlehne schematisch gezeigt und insgesamt mit 100 bezeichnet. Die Armlehne 100 umfasst einen Inertialsensor 110 und ist um eine Drehachse 120 drehbar gelagert. Durch eine Rotation (durch einen gekrümmten Pfeil angedeutet) um die Drehachse 120 kann die Armlehne 100 von einer Position A (durchgezogene Linien) in eine Position B (gestrichelte Linien) hochgeklappt werden. Dadurch, dass der Inertialsensor 110 in dem gezeigten Beispiel in einer von der Drehachse beabstandeten Position angeordnet ist, erfährt er bei einer solchen Rotation um die Drehachse sowohl eine laterale Beschleunigung, als auch eine Rotation, die beide durch den Inertialsensor 110 erfassbar sind. Insbesondere ist die Erdbeschleunigung in jeder Armlehnenposition detektierbar. Der Inertialsensor 110 sendet Sensorsignale, insbesondere die durch ihn erfasste (Erd-)Beschleunigung und/oder Drehgeschwindigkeit an eine Recheneinheit 130, beispielsweise ein Steuergerät einer Arbeitsmaschine (z.B. Bagger), von deren Sitz die Armlehne 100 ein Teil ist. Das Senden der Sensorsignale kann beispielsweise drahtlos und/oder drahtgebunden, beispielsweise über ein BUS-System oder andere, an sich bekannte Übertragungstechnologien, erfolgen.

In Figur 2 ist eine zweite Ausgestaltung einer Armlehne schematisch dargestellt und insgesamt mit 200 bezeichnet. Die Armlehne 200 unterscheidet sich von der in Fig. 1 dargestellten Armlehne 100 insbesondere darin, dass in Armlehne 200 zwei Inertialsensoren 110, 112 vorgesehen sind, die in dem gezeigten Beispiel gegeneinander um 90° gedreht angeordnet sind. Dies erhöht die Detektionsgenauigkeit bzw. -sicherheit im Vergleich zu Einzelsensoren. Die Inertialsensoren 110, 112 sind mit einer Recheneinheit 130 datenleitend verbunden und dazu eingerichtet, Sensorsignale, wie bereits in Bezug auf Fig. 1 erläutert, an die Recheneinheit 130 zu senden.

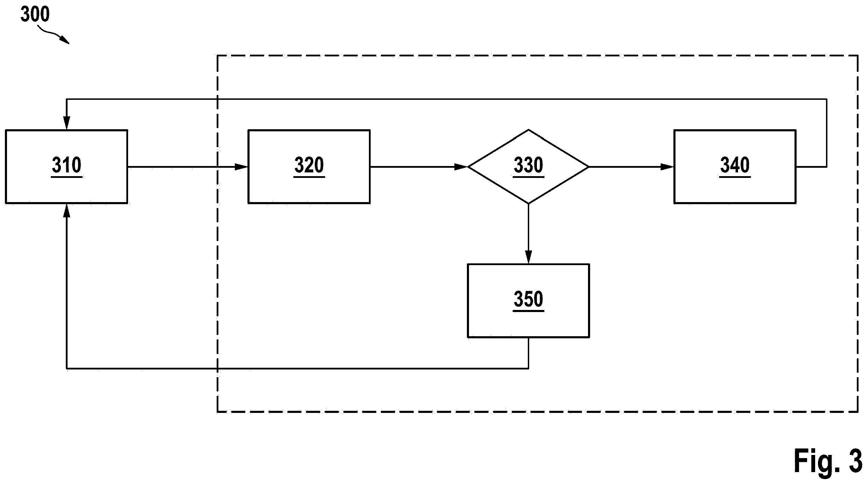

In Figur 3 ist eine Ausgestaltung eines erfindungsgemäßen Verfahrens schematisch in Form eines Ablaufdiagramms dargestellt und insgesamt mit 300 bezeichnet. Insbesondere kann das Verfahren 300 unter Verwendung einer Armlehne 100 oder 200, wie sie in Fig. 1 bzw. Fig. 2 gezeigt sind, durchgeführt werden.

Das Verfahren 300 umfasst einen Erfassungsschritt 310, in dem eine Beschleunigung und/oder Rotationsgeschwindigkeit eines oder mehrere Inertialsensoren (z.B. Iner-tielsensor(en) 110, 112) ermittelt wird (z.B. durch den/die Sensor(en) 110, 112 selbst). In einem Schritt 320 wird aus der in Erfassungsschritt 310 ermittelten Beschleunigung bzw. Rotationsgeschwindigkeit von Sensor(en) 110, 112 eine aktuelle Position bzw. Lage der Armlehne 100, 200 ermittelt. Dazu kann beispielsweise die Richtung der Erdbeschleunigung erfasst werden. Alternativ kann auch eine abrupte Änderung im betreffenden Sensorsignal dahingehend ausgewertet werden, dass die Armlehne an einem Anschlag angekommen ist. Aus dem Vorzeichen des Sensorsignals vor dem Auftreffen auf dem Anschlag kann die Bewegungsrichtung ermittelt werden und damit auch festgestellt werden, ob es sich bei dem Anschlag um einen oberen (Armlehne in Position B) oder einen unteren Anschlag (Armlehne in Position A) handelt.

Basierend auf der so ermittelten Position der Armlehne wird in einem Freigabeschritt 330 entschieden, ob und wenn ja, welche Maschinenfunktionen freigeschaltet werden. Beispielsweise kann bei hochgeklappter Armlehne (Position B) zwar ein Motorstart freigegeben (Schritt 350) werden, jedoch eine Bewegung der Arbeitsmaschine (Schritt 340) gesperrt sein, indem eine Freigabe beispielsweise einer Ansteuerung eines Hydraulikaggregats oder eines Fahrgetriebes verweigert wird. Umgekehrt können bei heruntergeklappter Armlehne (Position A) Bewegungen der Arbeitsmaschine freigegeben (Schritt 340) bzw. zugelassen sein, während ein Motorstart (Freigabe in Schritt 350) in einer solchen Situation beispielsweise gesperrt sein kann. Ggf. kann der Motorstart auch bei heruntergeklappter Armlehne (Position A) freigegeben sein, also keine Motorstartsperre in Abhängigkeit von der Armlehnenposition erfolgen. In einem solchen Fall wäre Schritt 350 obsolet, da keine Freigabe des Motorstarts zu erfolgen braucht.

Nach Ausführen der jeweils freigegebenen Maschinenfunktion (Schritt 340 und/oder 350) kann das Verfahren 300 jeweils zu dem Erfassungsschritt 310 zurückkehren (bzw. können die Schritte 310, 320 und/oder 330 auch parallel zu den Schritten 340 und/oder 350 im Wesentlichen kontinuierlich oder zyklisch durchgeführt werden), um im Falle einer Veränderung der Armlehnenposition ggf. eine oder mehrere Maschinenfunktionen zu sperren. Dadurch kann beispielsweise eine Freigabe einer Maschinenbewegung zurückgenommen werden, wenn die Armlehne 100, 200 von Position A (Freigabe erteilt) in Position B bewegt wird, was beispielsweise auf ein Aussteigen des Maschinenbedieners hindeutet. In einem solchen Fall könnte es bei anhaltender Freigabe der Maschinenbewegung zu einer versehentlichen Bewegung der Arbeitsmaschine (z.B. Senken eines Baggerarms) kommen, wenn der Maschinenbediener beim Aussteigen an einem Bedienelement hängen bleibt oder dergleichen. Eine Zurücknahme der Freigabe kann daher ggf. Unfälle verhindern, indem die Maschinenbewegung gestoppt wird, wenn der Maschinenbediener vermutlich den Steuerstand der Arbeitsmaschine verlassen möchte.

Die in der Figur 3 mittels einer gestrichelten Linie graphisch zusammengefassten Schritte 320, 330, 340 und 350 können insbesondere von der Recheneinheit 130 gesteuert werden, während der Erfassungsschritt 310 im Wesentlichen von dem bzw. den verwendeten Sensor(en) durchgeführt werden kann.

## Patentansprüche

1. Verfahren (300) zum Ermitteln einer Position (A, B) einer Armlehne (100, 200) eines Sitzes in einem Steuerstand einer Arbeitsmaschine, umfassend Ermitteln einer Beschleunigung und/oder Rotationsgeschwindigkeit (310) mittels zumindest eines Inertialsensors (110, 112), und
Ermitteln (320) der Position (A, B) der Armlehne (100, 200) auf Basis der ermittelten Beschleunigung bzw. Rotationsgeschwindigkeit.

2. Verfahren (300) nach Anspruch 1, umfassend ein Steuern einer Maschinenfunktion (340, 350) in Abhängigkeit von der ermittelten Position (A, B) der Armlehne (100, 200).

3. Verfahren (300) nach Anspruch 2, wobei das Steuern der Maschinenfunktion (340, 350) ein Freigeben (330) eines Motorstarts (350) und/oder ein Freigeben (330) einer Ansteuerung (340) eines Arbeitsaggregats der Arbeitsmaschine umfasst.

4. Verfahren (300) nach einem der vorstehenden Ansprüche, wobei das Ermitteln (310) der Beschleunigung und/oder Rotationsgeschwindigkeit mittels zumindest zwei Inertialsensoren (110, 112) erfolgt.

5. Recheneinheit (130) umfassend einen Prozessor, der so konfiguriert ist, dass er das Verfahren (300) nach einem der vorstehenden Ansprüche ausführt.

6. Armlehne (100, 200) für einen Sitz eines Steuerstands einer Arbeitsmaschine mit zumindest einem Inertialsensor (110, 112), insbesondere zumindest zwei Inertialsensoren, wobei der mindestens eine Inertialsensor (110, 112) dazu eingerichtet ist, Daten an eine Recheneinheit (130) gemäß Anspruch 5 zu senden, um die Durchführung eines Verfahrens (300) nach einem der Ansprüche 1 bis 4 zu ermöglichen.

7. Sitz für einen Steuerstand einer Arbeitsmaschine, der zumindest eine Armlehne (100, 200) nach Anspruch 6 aufweist.

8. Arbeitsmaschine mit einem Sitz nach Anspruch 7 und einer Recheneinheit (130) nach Anspruch 5.

9. Computerprogramm umfassend Befehle, die bei der Ausführung des Programms durch einen Computer diesen veranlassen, das Verfahren (300) nach Anspruch 1 bis 4 auszuführen.

10. Computerlesbarer Datenträger, auf dem das Computerprogramm nach Anspruch 9 gespeichert ist.
